# EUROPEAN PATENT APPLICATION

(11) **EP 4 625 532 A1**
(43) Date of publication of application: **01.10.2025**
(21) Application number: 23912843.2
(22) Date of filing: 22.12.2023
(51) Int. Cl.: H01M 4/36, H01M 4/583, H01M 4/133, H01M 10/052, C01B 32/05, C01B 32/15, H01M 4/02

(54) **CATHODE MATERIAL FOR LITHIUM-SULFUR BATTERY, AND LITHIUM-SULFUR BATTERY COMPRISING SAME**

(30) Priority: 27.12.2022 KR 20220186344
(71) Applicant: LG Energy Solution, Ltd., Seoul 07335 (KR); Korea Advanced Institute of Science and Technology, Daejeon 34141 (KR)
(72) Inventor: PARK, Seong-Hyo, Daejeon 34122 (KR); KIM, Hee-Tak, Daejeon 34141 (KR); LEE, Chang-Hoon, Daejeon 34122 (KR); KIM, Il-Ju, Daejeon 34141 (KR)
(74) Representative: Goddar, Heinz J.
(86) International application number: PCT/KR2023/021515
(87) International publication number: WO 2024/144168

(57) **Abstract**

The present disclosure relates to a carbon composite for use in a positive electrode of a lithium-sulfur battery and a method for manufacturing the same, and the carbon composite includes a porous carbon substrate, and metal particles on at least part of a surface of the porous carbon substrate, wherein the metal particles are spiky in shape.

## Description

### TECHNICAL FIELD

The present disclosure relates to a positive electrode material for a lithium-sulfur battery and a lithium-sulfur battery including the same.

The present application claims priority to Korean Patent Application No. 10-2022-0186344 filed on December 27, 2022 in the Republic of Korea, the disclosure of which is incorporated herein by reference.

### BACKGROUND ART

A lithium-sulfur battery is a battery system using a sulfur-based material having a sulfur-sulfur (S-S) bond as a positive electrode active material and a lithium metal as a negative electrode active material. Sulfur, the main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur battery technology that achieves theoretically higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing an electron into a lithium cation, and reduction at the positive electrode active material, the sulfur-based material, by accepting electrons. Through the reduction reaction, the sulfur-based material is converted to a sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sx) by the reduction reaction and is completely reduced to lithium sulfide (Li₂S).

In this instance, due to accumulation of the lithium sulfide on the electrode surface of the lithium-sulfur batteries, the lithium-sulfur batteries have lower discharge capacity than the theoretical capacity. Recently, there is a need for vehicles traveling long distance on one charge in the automotive market, and to meet the need, the battery industry is attempting to develop batteries that allow vehicles to go further on a single charge. To keep up with the trend, there is a need for development of lithium-sulfur batteries that meet the energy density criterion to allow vehicles to go further on a single charge.

To commercialize lithium-sulfur batteries, there is a need for technological development to overcome passivation caused by the accumulation of lithium sulfide on electrodes.

### SUMMARY

### Technical Problem

The present disclosure is designed to overcome passivation caused by the accumulation of lithium sulfide on electrodes used in lithium-sulfur batteries.

To this end, an aspect of the present disclosure is directed to providing an electrode for a lithium-sulfur battery in which the deposition of lithium sulfide is induced to occur at a specific location on the electrode surface to effectively control the deposition of lithium sulfide.

Additionally, another aspect of the present disclosure is directed to providing a lithium-sulfur battery including an electrode of a 3-dimensional shape for locally induced deposition of lithium sulfide, combined with an electrolyte having high solubility for lithium sulfide to effectively control the deposition of lithium sulfide.

Accordingly, the present disclosure is directed to providing a lithium-sulfur battery with high sulfur utilization by improving electron supply to lithium sulfide and lithium polysulfide through the induced deposition of lithium sulfide at a specific location.

### Technical Solution

To solve the above-described problem, according to an aspect of the present disclosure, there are provided carbon composites of the following embodiments.

The carbon composite according to a first embodiment includes a porous carbon substrate, and metal particles on at least part of a surface of the porous carbon substrate, wherein the metal particles are spiky in shape.

According to a second embodiment, in the first embodiment, given that a location adjacent to the surface of the porous carbon substrate where the metal particles are formed is referred to as lower and a direction running outward from the surface of the porous carbon substrate is referred to as upper, the spiky metal particles may have a shape with a smaller upper radius than a lower radius and an L/D of 1 or more, wherein the L/D is a ratio of a total length to the lower radius.

According to a third embodiment, in the first or second embodiment, the spiky metal particles may have the L/D of 5 or more.

According to a fourth embodiment, in any one of the first to third embodiments, the upper radius (D₅₀) of the spiky metal particles may be 100 nm or less.

According to a fifth embodiment, in any one of the first to fourth embodiments, the lower radius (D₅₀) of the spiky metal particles may be from 100 nm to 1,000 nm.

According to a sixth embodiment, in any one of the first to fifth embodiments, the total length (D₅₀) of the spiky metal particles may be from 1 µm to 10 µm.

According to a seventh embodiment, in any one of the first to sixth embodiments, the porous carbon substrate may include carbon fiber cloth, carbon nanotube (CNT), graphene, graphene oxide (GO), reduced graphene oxide (rGO), carbon black, graphite, graphite nanofiber (GNF), carbon nanofiber (CNF), activated carbon fiber (ACF), activated carbon, fullerene or two or more of these materials.

According to an eighth embodiment, in any one of the first to seventh embodiments, the metal particles may include transition metal particles.

According to another aspect of the present disclosure, there are provided electrodes and batteries of the following embodiments.

The electrode according to a ninth embodiment includes the carbon composite according to any one of the first to eighth embodiments; and a sulfur-based material.

According to a tenth embodiment, in the ninth embodiment, the sulfur-based material may be coated on all or part of a surface of the carbon composite.

The lithium secondary battery according to an eleventh embodiment includes an electrode assembly including a positive electrode, a negative electrode and a separator between the positive electrode and the negative electrode; and an electrolyte, wherein the positive electrode is the electrode according to the ninth or tenth embodiment.

In the lithium secondary battery according to a twelfth embodiment, in the eleventh embodiment, the electrolyte may include, as a lithium salt, LiBr, LiCl, LiI, LiTf or a mixture thereof.

In the lithium secondary battery according to a thirteenth embodiment, in the eleventh or twelfth embodiment, the lithium secondary battery may be a lithium-sulfur battery.

According to still another aspect of the present disclosure, there are provided methods for manufacturing carbon composites of the following embodiments.

The method for manufacturing the carbon composite according to a fourteenth embodiment is a method for manufacturing the carbon composite according to any one of the first to eighth embodiments, and includes mixing a metal chloride hydrate, an ammonium fluoride and urea to prepare a metal particle precursor solution; and forming spiky metal particles on at least part of a surface of a porous carbon substrate through hydrothermal reaction while the porous carbon substrate is in contact with the metal particle precursor solution.

According to a fifteenth embodiment, in the fourteenth embodiment, the metal chloride hydrate may be a chloride hydrate of transition metal.

### Advantageous Effects

The carbon composite according to an embodiment of the present disclosure may achieve the lithium-sulfur battery having high discharge capacity by the induced deposition of lithium sulfide at a specific location during operation of the battery.

Specifically, the lithium-sulfur battery using the positive electrode active material containing sulfur (S)-sulfur (S) bond may suppress accumulation of lithium sulfide over the entire surface of the positive electrode by the induced accumulation of lithium sulfide (Li₂S) at a specific location of the positive electrode surface, thereby preventing electrode passivation, leading to high sulfur utilization in the positive electrode for the lithium-sulfur battery and the lithium-sulfur battery.

### BRIEF DESCRIPTION OF THE DRAWINGS

The accompanying drawings illustrate an exemplary embodiment of the present disclosure and together with the foregoing description, serve to provide a further understanding of the technical aspect of the present disclosure, and thus, the present disclosure should not be construed as being limited to the drawings.
FIG. 1 shows life characteristics evaluation results of batteries according to Experimental Example 1 in the present disclosure.
FIG. 2 shows discharge capacity evaluation results of batteries according to Experimental Example 1 in the present disclosure.
FIG. 3 shows resistance curve evaluation results of batteries according to Experimental Example 2 in the present disclosure. In FIG. 3, the graph of Comparative Example 4 shows 2 Hz.
FIG. 4 shows observation results of lithium sulfide deposition morphology on electrodes of Example 2 and Example 3 according to an experiment in the present disclosure.
FIG. 5 shows observation results of lithium sulfide deposition morphology on electrodes of Example 2 and Example 3 according to an experiment in the present disclosure.
FIG. 6 shows X-ray photoelectron spectroscopy (XPS) analysis results of metal particles after the deposition of lithium sulfide on electrodes of Example 2 and Example 3 according to an experiment in the present disclosure.
FIG. 7 is an observation image with an electron scanning microscope on electrode surface of Comparative Example 5 according to an experiment in the present disclosure.
FIG. 8 shows observation results of lithium sulfide deposition morphology on electrode of Comparative Example 5 according to an experiment in the present disclosure.

### DETAILED DESCRIPTION

Hereinafter, the present disclosure will be described in more detail.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The term "comprise" or "include" when used in this specification, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

In the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mini II.

The term "polysulfide" as used herein is the concept that covers "polysulfide ion (Sx₂⁻, 1<x ≤ 8)" and "lithium polysulfide (Li₂Sₓ or LiSx-, 1<x ≤ 8)".

The term "composite" as used herein refers to a material with physically·chemically different phases and more effective functions, formed by combining two or more materials.

The term "porosity" as used herein refers to the ratio of the volume of pores to the total volume of a structure, as indicated in vol%, and may be used interchangeably with the term pore ratio, void ratio, etc.

In the present disclosure, "particle size Dn" refers to a particle size at n% of cumulative volume particle size distribution of particles. That is, "particle size D₅₀" refers to a particle size at 50% of cumulative volume particle size distribution of particles. The particle size Dn may be measured using a laser diffraction method. For example, the particle size D50 may be measured by dispersing a target particle powder in a dispersion medium, feeding into a commercially available laser diffraction particle size measurement apparatus (for example, Microtrac MT 3000), irradiating ultrasound of about 28 kHz with an output of 60W to acquire a cumulative volume particle size distribution graph, and determining the particle size corresponding to 50% of the cumulative volume distribution.

The present disclosure relates to a carbon composite for an electrochemical device, a positive electrode active material including the same, a positive electrode and a secondary battery including the positive electrode. The secondary battery may be a lithium ion secondary battery. In particular, the positive electrode active material according to an aspect of the present disclosure includes a sulfur-based material, and the lithium ion secondary battery is a lithium-sulfur secondary battery.

The carbon composite used in the positive electrode of the lithium-sulfur battery is characterized in which spiky metal particles are formed on a porous carbon material.

### Carbon composite

Specifically, a carbon composite according to an aspect of the present disclosure includes a porous carbon substrate and metal particles on at least part of the surface of the porous carbon substrate, and the metal particles are spiky in shape.

In an embodiment of the present disclosure, the 'spiky shape' of the metal particles may be defined as below by way of example.

For example, when a location adjacent to the surface of the porous carbon substrate where the metal particles are formed is referred to as 'lower' and a direction running outward from the surface of the porous carbon substrate is referred to as 'upper', the spiky metal particles may have a shape in which the upper radius is smaller than the lower radius and a ratio of the total length to the lower radius (L/D) is 1 or more.

Specifically, the spiky metal particles may have the L/D of 1 or more. For example, the spiky metal particles may have the L/D of 5 or more. The lower limit of the L/D ratio is a ratio for the metal particles to take the spiky shape, and when the L/D has a smaller lower limit than the aforementioned value, electric fields may concentrate less intensively on the spiky tip (top) of the metal particles, and initial nuclei of lithium sulfide may not be formed at the spiky tip (top), or the nucleation effect may be insignificant. To achieve the objective of the present disclosure, the L/D may be preferably 1 or more.

Additionally, the upper limit of the L/D ratio is not limited to a particular range and may lie in any range for achieving the above-described objective. However, when the spiky metal particles are too long, the particles may be likely to break and become brittle, and accordingly, for example, the upper limit of the L/D ratio may be preferably 50 or less, for example, 25 or less, 20 or less, or 15 or less.

In an embodiment of the present disclosure, the L/D ratio of the spiky metal particles may be, for example, 10.

The size of the spiky metal particles at each location may be measured through methods commonly used to determine the size of metal microparticles such as laser diffraction, electron microscopy, etc., and the measurement method is not particularly limited.

In an embodiment of the present disclosure, the size of the spiky metal particles at each location may refer to, for example, a size at 50% in the cumulative particle size distribution.

In an embodiment of the present disclosure, the upper radius D₅₀ of the spiky metal particles may be 100 nm or less.

In an embodiment of the present disclosure, the lower radius D₅₀ of the spiky metal particles may be from 100 nm to 1,000 nm.

In an embodiment of the present disclosure, the total length D₅₀ of the spiky metal particles may be from 1 µm to 10 µm.

In an embodiment of the present disclosure, the metal particles are characterized by their controlled shape as described above, and they are not limited to a particular material and may include any material having catalytic activity for the enhanced dynamic activity in the oxidation/reduction reaction of the sulfur-based material as the positive electrode active material.

For example, the metal particles are not limited to a particular type and may include transition metal particles that may be used in the positive electrode of the lithium-sulfur battery. The transition metal may include, for example, zinc (Zn), vanadium (V), chromium (Cr), manganese (Mn), iron (Fe), cobalt (Co), nickel (Ni), copper (Cu), zirconium (Zr), niobium (Nb), molybdenum (Mo), technetium (Tc), rubidium (Ru), rhodium (Rh), palladium (Pd), silver (Ag), cadmium (Cd), lanthanum La), hafnium (Hf), tantalum (Ta), tungsten (W), osmium (Os), iridium (Ir), cerium (Ce), galadium (Gd), scandium (Sc), titanium (Ti), gallium (Ga), indium (In) or two or more of them.

In an embodiment of the present disclosure, the transition metal included in the catalyst may include cobalt (Co).

In the present disclosure, because the carbon composite includes the spiky metal particles, while used in the electrode, electric fields concentrate on the top tip of the spiky metal particles. During operation of the lithium-sulfur battery using the same, it may be possible to spatially control the initial nucleation of lithium sulfide. Accordingly, it may be possible to induce the deposition of lithium sulfide to occur at the top tip of the spiky metal particles.

In an embodiment of the present disclosure, the porous carbon substrate is a substrate for growth of the metal particles and loading of the sulfur-based material, and may include those used in positive electrodes of lithium secondary batteries without limitation.

For example, the porous carbon substrate may include carbon fiber cloths, carbon nanotubes (CNT), graphene, graphene oxide (GO), reduced graphene oxide (rGO), carbon black, graphite, graphite nanofibers (GNF), carbon nanofibers (CNF), activated carbon fibers (ACF), activated carbon, fullerene or a mixture thereof.

In an embodiment of the present disclosure, the porous carbon substrate may include carbon fibers.

In an embodiment of the present disclosure, the porous carbon substrate may include carbon cloths (also referred to as carbon fiber cloths).

The carbon composite according to an embodiment of the present disclosure provides an electrode frame, and the carbon composite by which the active material is supported without including a current collector may be provided as an electrode, but the use of the carbon composite is not limited thereto.

In an embodiment of the present disclosure, the porous carbon substrate acts as a host to provide skeleton for uniform and stable immobilization of the sulfur-based material used as the positive electrode active material of the lithium-sulfur battery, and thereby compensates for low electrical conductivity of sulfur for enhanced electrochemical reaction.

Accordingly, the porous carbon substrate may include a plurality of pores on the surface and inside thereof. In an embodiment of the present disclosure, the porous carbon substrate may have the Brunauer-Emmett-Teller (BET) specific surface area of 1,500 m²/g or more.

The carbon composite according to the present disclosure may achieve high loading of the sulfur-based material, low irreversible capacity and high energy density due to the large BET specific surface area of the porous carbon substrate that acts as a host for the sulfur-based material in the positive electrode. That is, it may be possible to achieve an electrode having a structure for improving sulfur utilization in electrochemical reaction and a lithium secondary battery including the same.

In another embodiment of the present disclosure, the porous carbon substrate may be manufactured by carbonization of a variety of carbon precursors.

### Electrode

According to another aspect of the present disclosure, there is provided an electrode including the carbon composite and the sulfur-based material as described above.

In an embodiment of the present disclosure, the electrode including the sulfur-based material as the active material may be preferably used as a positive electrode.

The electrode may have a coating structure of the sulfur-based material on all or part of the surface of the carbon composite.

In this instance, in an embodiment of the present disclosure, the sulfur-based material may be loaded into the pores of the porous carbon substrate in the carbon composite and all or at least part of the surface of the porous carbon substrate in the carbon composite.

In an embodiment of the present disclosure, the sulfur-based material may be deposited on at least part of the surface of the carbon composite.

In an embodiment of the present disclosure, the sulfur-based material is not limited to a particular type and may include any type of sulfur-based material that contains sulfur (S)-sulfur (S) bond in at least one state of oxidized state or discharged state and may be used as the positive electrode active material of the lithium-sulfur battery.

The sulfur-based material may include, for example, at least one selected from the group consisting of inorganic sulfur (S₈), lithium sulfide (Li₂S), lithium polysulfide (Li₂Sn, 1<n≤8), disulfide compounds such as 2,5-dimercapto-1,3,4-thiadiazole, 1,3,5-trithiocyanuic acid, organic sulfur compounds and carbon-sulfur polymer ((C₂Sₓ)n, x=2.5 to 50, n≥2).

In an embodiment of the present disclosure, the sulfur-based material may preferably include sulfur (S₈), lithium sulfide (Li₂S), lithium polysulfide (Li₂Sn, 1<n≤8) or a mixture thereof.

In an embodiment of the present disclosure, the sulfur-based material may include sulfur (S₈), lithium sulfide (Li₂S) or a mixture thereof.

In another embodiment of the present disclosure, the sulfur-based material may include lithium polysulfide (Li₂Sn, 1<n≤8) or a mixture thereof.

In an embodiment of the present disclosure, the electrode may include the sulfur-based material in an amount of 30 wt% or more, for example, 40 wt% or more, 50 wt% or more, or 60 wt% or more, for example 70 wt% or more based on 100 wt% of the electrode to achieve high capacity batteries. For example, the sulfur-based material may be included in an amount of from 40 wt% to 80 wt%, from 40 wt% to 60 wt% or from 40 wt% to 50 wt% based on 100 wt% of the electrode, but the present disclosure is not limited thereto.

In an embodiment of the present disclosure, the electrode may include the carbon composite including the spiky metal particles over 3 cm X 4 cm of the porous carbon substrate, and may include the sulfur-based material, for example, lithium polysulfide deposited on part of the surface of the carbon composite.

In the positive electrode active material according to the present disclosure, the sulfur-based material may be located in at least one surface of the pores of the porous carbon substrate or the outer surface of the porous carbon substrate, and in this instance, the sulfur-based material may be present in an area of less than 100%, preferably 1 to 95%, and more preferably 60 to 90% of the entire inner and outer surface of the porous carbon substrate. When the sulfur-based material is present in the above-described range on the surface of the porous carbon substrate, maximum effect may be exhibited in terms of electron transport area and electrolyte wetting. Specifically, within the above-described range, the electron transport contact area may increase during charging·discharging since the sulfur-based material is thinly and evenly impregnated into the surface of the porous carbon substrate.

The electrode may be manufactured by simply mixing the sulfur-based material with the carbon composite to form a composite or coating or loading into a core-shell structure. The coating of the core-shell structure may comprise coating any one of the sulfur-based material or the carbon composite on the other material, and for example, covering the carbon composite surface with the sulfur-based material, or vice versa. Additionally, the loading may comprise filling the sulfur-based material in the porous carbon substrate of the carbon composite, especially, in the pores. The electrode may come in any form that satisfies the aforementioned content ratio of the sulfur-based material and the carbon composite and is not limited in the present disclosure.

As described above, according to an embodiment of the present disclosure, the sulfur-based material may be preferably deposited on at least part of the surface of the carbon composite. More specifically, the carbon composite includes the spiky metal particles on the porous carbon substrate, and in this instance, the sulfur-based material may be deposited on at least part of the surface of the spiky metal particles. More preferably, the sulfur-based material may be deposited on the upper part of the spiky metal particles (in this instance, an area adjacent to the porous carbon substrate is referred to as lower, and a direction in which the spiky shape grows is referred to as upper) in a spatially specific manner.

The electrode using the sulfur-carbon composite according to an embodiment of the present disclosure has a structure for increasing sulfur loading and sulfur utilization, thereby enhancing electrochemical reactivity of sulfur and improving the access to and contact with an electrolyte solution, leading to improved capacity and life characteristics of the lithium-sulfur battery.

In an embodiment of the present disclosure, the above-described electrode ay be a positive electrode, and in this instance, the positive electrode may further include a positive electrode current collector.

However, as described above, according to an embodiment of the present disclosure, the electrode may include the porous carbon substrate alone without the current collector, and preferably, may not include the current collector.

According to an embodiment of the present disclosure, the positive electrode may not include the current collector, and for example, the positive electrode active material including the carbon composite and the sulfur-based material may be used as the positive electrode itself.

Additionally, in addition to the above-described sulfur-based material, the positive electrode may further include at least one additive selected from transition metal elements, Group IIIA elements, Group IVA elements, compounds of these elements with sulfur, and alloys of these elements with sulfur as the positive electrode active material. In a specific embodiment of the present disclosure, the positive electrode active material layer may include lithium transition metal composite oxide represented by the following [Chemical Formula 1].

[Chemical Formula 1] LiₐNi_{b}Co_{c}M¹_{d}M²ₑO₂

In the above Chemical Formula 1, M¹ may be Mn, Al or a combination thereof, and preferably Mn or Mn and Al.

M² may be at least one selected from the group consisting of Zr, W, Y, Ba, Ca, Ti, Mg, Ta and Nb, preferably at least one selected from the group consisting of Zr, Y, Mg, and Ti, and more preferably Zr, Y or a combination thereof. The M² is not essential, but when it is included in an optimum amount, it may play a role in promoting grain growth during sintering, or improving crystal structure stability.

Meanwhile, in an embodiment of the present disclosure, when the positive electrode includes the current collector, the positive electrode current collector may include a variety of positive electrode current collectors used in the corresponding technical field. For example, the positive electrode current collector may include stainless steel, aluminum, nickel, titanium, sintered carbon, aluminum or stainless steel treated with carbon, nickel, titanium or silver on the surface, etc. The positive electrode current collector may be typically 3 µm to 500 µm in thickness, and may have microtexture on the surface to increase the adhesion strength of the positive electrode active material. The positive electrode current collector may come in various forms, for example, a film, a sheet, a foil, a net, a porous body, a foam, a nonwoven, etc.

In an embodiment of the present disclosure, in addition to the carbon composite, the electrode may further include a binder and/or a conductive material.

The binder plays a role in improving the attachment between the porous carbon substrate and the metal particles, and specific examples may include polyvinylidene fluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or a variety of copolymers thereof, used either singly or in combination. The binder may be included in an amount of from 1 to 30 wt%, preferably from 1 to 20 wt%, and more preferably from 1 to 10 wt% based on the total weight of the electrode.

When it is included, the conductive material is used to provide conductive properties to the electrode, and may include, without limitation, any conductive material having the ability to conduct electrons without causing any chemical change in the corresponding battery. Specific examples may include graphite such as natural graphite or artificial graphite; carbon-based materials such as carbon black, acetylene black, Ketjen black, channel black, furnace black, lamp black, thermal black, carbon fibers, carbon nanotubes, etc.; metal powders or metal fibers such as copper, nickel, aluminum, silver, etc.; conductive whiskers such as zinc oxide, potassium titanate, etc.; conductive metal oxide such as titanium oxide; or conductive polymer such as polyphenylene derivatives, used either singly or in combination. When it is included, the conductive material may be typically included in an amount of 1 to 30 wt%, preferably 1 to 20 wt%, and more preferably 1 to 10 wt% based on the total weight of the electrode.

### Lithium secondary battery

The present disclosure provides a lithium-sulfur battery including an electrode assembly including a positive electrode including the above-described carbon composite and an electrolyte. The electrode assembly includes a positive electrode, a negative electrode and a separator between the positive electrode and the negative electrode.

The electrode assembly may have, for example, a stack type or stack/folding structure including the negative electrode and the positive electrode stacked with the separator interposed between the negative electrode and the positive electrode, or a j elly-roll structure including the negative and positive electrodes and the separator rolled up. Furthermore, in the jelly-roll structure, an additional separator may be placed on the outer side to prevent the contact between the negative electrode and the positive electrode.

The negative electrode includes a negative electrode current collector; and a negative electrode active material layer on at least one surface of the negative electrode current collector, and the negative electrode active material layer includes a negative electrode active material, a conductive material and a binder.

### Negative electrode

The negative electrode will be described in more detail below.

The negative electrode may include a long sheet shaped negative electrode current collector and a negative electrode active material layer on one or two surfaces of the negative electrode current collector, and the negative electrode active material layer may include a negative electrode active material, a binder, and optionally a conductive material.

Specifically, the negative electrode may be manufactured by coating a negative electrode slurry on one or two surfaces of the long sheet shaped negative electrode current collector, the negative electrode slurry prepared by dispersing the negative electrode active material, the conductive material, the binder and optionally the conductive material, in a solvent such as dimethyl sulfoxide (DMSO), isopropyl alcohol, N-methylpyrrolidone (NMP), acetone and water, then followed by drying to removing the solvent from the negative electrode slurry and rolling. Meanwhile, the negative electrode including an uncoated portion may be manufactured by not coating the negative electrode slurry at a portion of the negative electrode current collector, for example, an end portion of the negative electrode current collector when coating the negative electrode slurry.

The negative electrode active material may include a material capable of reversible intercalation or deintercalation of lithium (Li⁺), a material capable of reversibly forming a lithium containing compound by reaction with lithium ions, a lithium metal or a lithium alloy. The material capable of reversible intercalation or deintercalation of lithium ions may include, for example, crystalline carbon, amorphous carbon or a mixture thereof, and specifically, may include, for example, artificial graphite, natural graphite, graphitizable carbon fibers, amorphous carbon, soft carbon, hard carbon, etc., but is not limited thereto. The material capable of reversibly forming the lithium containing compound by reaction with lithium ions may include, for example, tin oxide, titanium nitrate or silicon-based compounds. The lithium alloy may include, for example, alloys of lithium (Li) and metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be a lithium metal, and specifically, may be in the form of a lithium metal foil or a lithium metal powder. The silicon-based negative electrode active material may include Si, Si-Me alloys (where Me is at least one selected from the group consisting of Al, Sn, Mg, Cu, Fe, Pb, Zn, Mn, Cr, Ti, and Ni), SiO_{y} (where 0<y<2), Si-C composites or a combination thereof, and preferably SiO_{y} (where 0<y<2). Because the silicon-based negative electrode active material has high theoretical capacity, when the silicon-based negative electrode active material is included, it may be possible to improve capacity characteristics.

In an embodiment of the present disclosure, the negative electrode may include a lithium metal or a lithium alloy, and specifically, may be a lithium metal foil or a lithium alloy foil.

In an embodiment of the present disclosure, when the negative electrode uses a lithium metal foil or a lithium alloy foil, the negative electrode may be a freestanding lithium metal foil or lithium alloy foil without the current collector.

The negative electrode current collector may include negative electrode current collectors commonly used in the corresponding technical field, and may include, for example, copper, stainless steel, aluminum, nickel, titanium, sintered carbon, copper or stainless steel treated with carbon, nickel, titanium or silver on the surface, aluminum-cadmium alloys, etc. The negative electrode current collector may be typically 3 to 500 µm in thickness, and in the same way as the positive electrode current collector, may have microtexture on the surface to enhance the bonding strength of the negative electrode active material. For example, the negative electrode current collector may come in various forms, for example, a film, a sheet, a foil, a net, a porous body, a foam, a nonwoven, etc.

The binder plays a role in attaching the negative electrode active material particles to each other and improving the adhesion strength between the negative electrode active material and the negative electrode current collector. Specific examples may include polyvinylidene fluoride (PVDF), a vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or a variety of copolymers thereof, used either singly or in combination. The binder may be included in an amount of 1 to 30 wt%, preferably 1 to 20 wt%, and more preferably 1 to 10 wt% based on the total weight of the negative electrode active material layer.

The conductive material is used to provide conductive properties to the negative electrode, and may include, without limitation, any conductive material having the ability to conduct electrons without causing any chemical change in the corresponding battery. Specific examples may include graphite such as natural graphite or artificial graphite; carbon-based materials such as carbon black, acetylene black, Ketjen black, channel black, furnace black, lamp black, thermal black, carbon fibers, carbon nanotubes, etc.; metal powders or metal fibers of copper, nickel, aluminum, silver, etc.; conductive whiskers such as zinc oxide, potassium titanate, etc.; conductive metal oxide such as titanium oxide, etc.; or conductive polymer such as polyphenylene derivatives, etc., used either singly or in combination. When it is used, the conductive material may be typically included in an amount of 1 to 30 wt%, preferably 1 to 20 wt%, and more preferably 1 to 10 wt% based on the total weight of the negative electrode active material layer.

### Separator

Meanwhile, the electrode assembly further includes a separator and the separator is interposed between the negative electrode and the positive electrode in the electrode assembly. The separator may separate the negative electrode from the positive electrode and provide a movement passage of lithium ions, and may include, without limitation, any type of separator commonly used in lithium secondary batteries. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more layers of them. Additionally, commonly used porous nonwoven fabrics, for example, nonwoven fabrics made of high melting point glass fibers, polyethyleneterephthalate fibers, etc. may be used. Additionally, coated separators including ceramics or polymer materials may be used to ensure heat resistance or mechanical strength.

Another aspect of the present disclosure relates to an electrochemical device including the electrode assembly. The electrochemical device includes a battery case accommodating the electrode assembly together with an electrolyte, and the battery case is not limited to a particular type and may be properly selected from any type of battery cases commonly used in the corresponding technical field, for example, a pouch type, a metal can type, etc.

### Electrolyte

The electrolyte used in the lithium secondary battery according to an aspect of the present disclosure may include a variety of electrolytes that may be used in lithium secondary batteries. The electrolyte is not limited to a particular type, and may include, for example, an organic liquid electrolyte, an inorganic liquid electrolyte, a solid polymer electrolyte, a gel polymer electrolyte, a solid inorganic electrolyte and a molten inorganic electrolyte, etc.

Specifically, the electrolyte may comprise an organic solvent and a lithium salt.

The organic solvent may include, without limitation, any type of organic solvent that may act as a medium for the movement of ions involved in the electrochemical reaction of the battery. Specifically, the organic solvent may include an ester-based solvent such as methyl acetate, ethyl acetate, γ-butyrolactone, ε-caprolactone, etc.; an ether-based solvent such as dibutyl ether, tetrahydrofuran, etc.; a ketone-based solvent such as cyclohexanone, etc.; an aromatic hydrocarbon-based solvent such as benzene, fluorobenzene, etc.; a carbonate-based solvent such as dimethylcarbonate (DMC), diethylcarbonate (DEC), methylethylcarbonate (MEC), ethylmethylcarbonate (EMC), ethylene carbonate (EC), propylene carbonate (PC), etc.; an alcohol-based solvent such as ethylalcohol, isopropyl alcohol, etc.; nitriles of R-CN (R is C2-C20 straight-chain, branched-chain or cyclic hydrocarbon, and may comprise an exocyclic double bond or ether bond); amides such as dimethylformamide, etc.; dioxolanes such as 1,3-dioxolane, etc.; or sulfolanes.

Meanwhile, in an embodiment of the present disclosure, it is desirable to include a heterocylic compound including an oxygen atom or a sulfur atom to form a polymer protective layer in order to suppress the production of lithium dendrite, and prevent electrolyte solution decomposition and side reaction on the lithium-based metal surface. The heterocylic compound may include 3- to 15-membered, preferably 3- to 7-membered, and more preferably 5- and 6-membered heterocylic compounds.

The heterocylic compound may include a substituted or unsubstituted heterocylic compound with at least one selected from the group consisting of a C1-C4 alkyl group, a C3-C8 cyclic alkyl group, a C6-C10 aryl group, a halogen group, a nitro group (-NO₂), an amine group (-NH₂) and a sulfonyl group (-SO₂); or a multi-cyclic compound of the heterocylic compound with at least one selected from the group consisting of a C3-C8 cyclic alkyl group and a C6-C10 aryl group.

When the heterocylic compound is a substituted heterocylic compound with a C1-C4 alkyl group, preferably, radicals are stabilized, thereby suppressing side reaction between the additive and the electrolyte solution. Additionally, when the heterocylic compound is a substituted heterocylic compound with a halogen group or a nitro group, preferably, a functional protective layer may be formed on the lithium-based metal surface. The functional protective layer may be a stable and compact protective layer, and may allow uniform deposition of the lithium-based metal and suppress side reaction between polysulfide and the lithium-based metal.

Specifically, the heterocylic compound may include, for example, at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiphene, 2-propylthiophene, 2-butylthiophene, 2,3-dimethylthiophene, 2,4-dimethylthiophene and 2,5-dimethylthiophene, and preferably at least one selected from the group consisting of 2-methylfuran and 2-methylthiophene.

The lithium salt may include, without limitation, any compound that provides lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiBr, LiCl, LiI, LiTf or LiB(C₂O₄)₂. The concentration of the lithium salt may be preferably in a range between 0.1 and 5.0M, and preferably 0.1 and 3.0M. When the concentration of the lithium salt is included in the above-described range, the electrolyte may have proper conductivity and viscosity and exhibit the outstanding electrolyte performance, contributing to effective movement of lithium ions.

In an embodiment of the present disclosure, preferably, the lithium salt may include LiBr, LiCl, LiI, LiTf or a mixture thereof. When the lithium salt includes the above-described lithium salts, it may have a beneficial effect on solubility for lithium sulfide, thereby preventing the deposition of lithium sulfide in the electrode of the lithium-sulfur battery.

In particular, the lithium secondary battery may have a synergistic effect of performance improvement of the lithium-sulfur battery by the induced deposition of lithium sulfide at a specific location and deposition suppression through a combination of the carbon composite including the spiky metal particles in the positive electrode and LiBr, LiCl, LiI, LiTf or a mixture thereof in the electrolyte, but the present disclosure is not limited thereto.

For example, even though the positive electrode including the above-described carbon composite is used, when the composition having high solubility for lithium sulfide is used in the electrolyte, the spatial control effect of the carbon composite on the deposition of lithium sulfide may be low.

From this perspective, according to an embodiment of the present disclosure, the lithium salt may include LiBr.

In addition to the above-described constituent substances of the electrolyte, the electrolyte may further include an additive to improve the life characteristics of the battery, prevent the capacity fading of the battery and improve the discharge capacity of the battery. For example, the additive may include LiNO₃, haloalkylene carbonate-based compounds such as difluoro ethylene carbonate, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol or aluminum trichloride, used either singly or in combination, but is not limited thereto. The additive may be included in an amount of 0.1 to 10 wt%, and preferably 0.1 to 5 wt% based on the total weight of the electrolyte.

As described above, the lithium secondary battery according to the present disclosure may be a lithium-sulfur battery.

The lithium-sulfur battery is not limited to a particular shape and may come in various shapes, for example, a cylindrical type, a stack type, a coin type and so on.

Additionally, the present disclosure provides a battery module including the lithium-sulfur battery as a unit cell. The battery module may be used as a source of power for medium- and large-scale devices that require high temperature stability, long cycle characteristics and high capacity characteristics.

Examples of the medium- and large-scale device may include devices that work using power produced by electric motors, such as power tools; electric cars including electric vehicles (EV), hybrid electric vehicles (HEV), plug-in hybrid electric vehicles (PHEV), etc.; electric two-wheeled vehicles including E-bikes and E-scooters; electric golf carts; energy storage systems, etc., but are not limited thereto.

Hereinafter, examples are presented to help understanding of the present disclosure, but the following examples are provided to describe the present disclosure by way of example and it is obvious to those skilled in the art that various modifications and changes may be made without departing from the scope and technical aspect of the present disclosure, and such modifications and changes fall within the scope of the appended claims.

### [Manufacture of carbon composite]

### Comparative Example 1. Manufacture of bare CC carbon composite

A commercially available carbon fiber cloth made of carbon fibers having a diameter of a few µm (Cetech, WOS1011) was washed with ethanol and distilled water.

### Example 1. Manufacture of CC@CoP1 carbon composite

A carbon composite including spiky metal particles was synthesized on a 3 cm X 4 cm area of the carbon fiber cloth prepared in Comparative Example 1 by dissolving 0.595 g of cobalt chloride hydrate, 0.13g of ammonium fluoride and 0.27g of urea (cobalt chloride hydrate: ammonium fluoride: urea mass ratio = 4.6:1:2) in 40 mL of distilled water and causing 12-hour hydrothermal reaction using water as a solvent at 100°C.

The carbon composite included spiky cobalt metal particles, and the spiky shape of the cobalt metal particles had a lower radius of 500 nm, an upper radius of 100 nm, a total length of 5 µm, and a ratio of total length/lower radius (L/D) of 10.

### Comparative Example 2. Manufacture of CC@CoP2 carbon composite

A carbon composite was manufactured in the same way as Example 1 except that cobalt chloride hydrate was not used as a cobalt precursor and replaced with cobalt acetate, and solvothermal reaction using methanol was performed at 170°C for 6 hours.

It was confirmed that the carbon composite included cobalt metal particles on the carbon fiber cloth, but the cobalt metal particles were not spiky in shape and were in a granular shape.

### [Manufacture of electrode]

Sulfur was supported on the carbon composite according to Example 1, Comparative Example 1 or Comparative Example 2 by adding droplets of 0.2 M of Li₂S₈ solution (Li₂S:S₈ molar ratio 1:.875 in DME) to manufacture a positive electrode (sulfur (S₈) content: 45 wt% based on the total weight of the positive electrode).

For a negative electrode, a 35 µm thick lithium metal foil was used. For a separator, a porous polyethylene was used. An electrolyte solution was prepared by adding 3 wt% of LiNO₃ to a mixed organic solvent of 2-methyl furan and dimethoxyethanol (33/77 volume ratio). In the experiment, 1M of LiBr or 1M of LiTFSI was used as a lithium salt.

The positive electrode and the negative electrode prepared as described above were placed with the separator interposed between them, and the prepared electrolyte solution was injected to fabricate a pouch cell.

The following TABLE 1 summarizes the types of carbon composites and lithium salts used to manufacture the batteries.

**[TABLE 1]**

| Battery | Carbon composite used in positive electrode | Lithium salt in electrolyte |
|---|---|---|
| Example 2(CC@CoP1-Br) | Example 1(CC@CoP1) | 1M LiBr |
| Example 3(CC@CoP1-TFSI) | Example 1(CC@CoP1) | 1M LiTFSI |
| Comparative Example 3(Bare CC-Br) | Comparative Example 1(Bare CC) | 1M LiBr |
| Comparative Example 4(Bare CC-TFSI) | Comparative Example 1(Bare CC) | 1M LiTFSI |
| Comparative Example 5(CC@CoP2-Br) | Comparative Example 2(CC@CoP2) | 1M LiBr |

### Experimental Example 1. Evaluation of discharge capacity and life characteristics

The as-prepared lithium-sulfur batteries were discharged at 0.5C in a CC mode at 25°C to 1.8 V and charged with a constant current of 0.3C to 2.5 V, and discharge capacity was measured/compared. The discharge capacity was measured on the basis of sulfur content (mAh/g (weight of sulfur)).

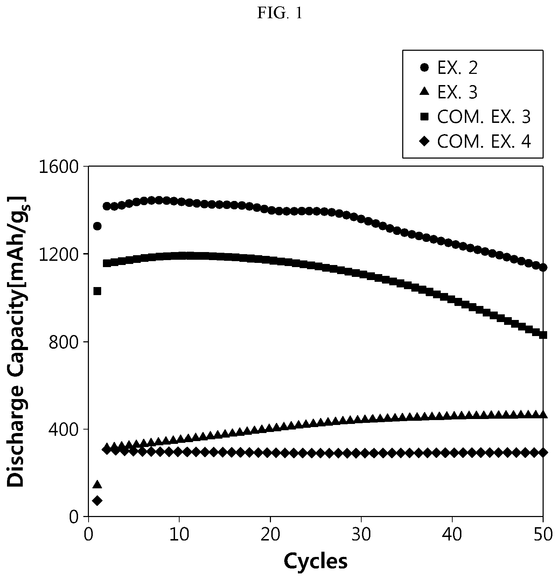

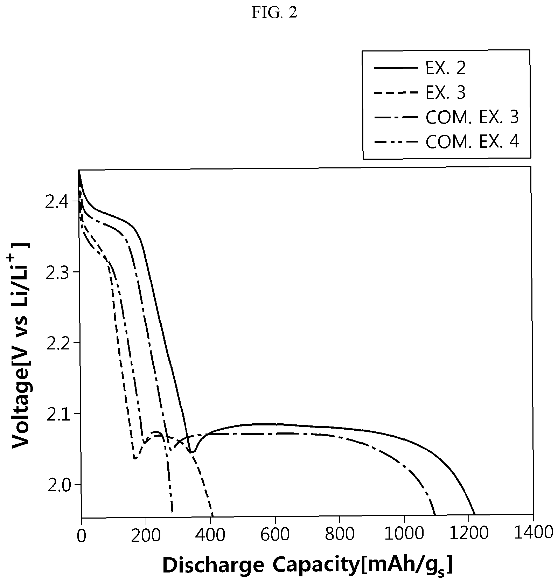

The measurement results are shown in FIGs. 1 and 2.

According to FIGs. 1 and 2, each of the batteries of Example 2 and Example 3 using the carbon composite including the spiky cobalt metal particles as a sulfur host in the positive electrode had superior discharge capacity and life characteristics to the batteries of Comparative Example 3 and Comparative Example 4 having the same electrolyte composition, respectively.

This reveals that according to an embodiment of the present disclosure, when the active material such as lithium sulfide (Li₂S) is supported on the porous carbon substrate including the grown spiky metal particles, the deposition of lithium sulfide on the electrode is spatially controlled, leading to improved discharge capacity and life characteristics compared to the uncontrolled deposition of lithium sulfide (Comparative Example 3, Comparative Example 4).

Lithium sulfide is electrically insulative and acts as resistance on the electrode, and the deposition of lithium sulfide on the electrode surface is spatially controlled such that the lower part of the electrode having the spiky structure is not covered with lithium sulfide, leaving the lower part of the electrode as a continuous source of electron supply. Accordingly, it may be possible to increase sulfur utilization in the electrode, thereby improving discharge capacity and life characteristics.

Meanwhile, referring to FIGs. 1 and 2, it was confirmed that the batteries of Example 2 and Comparative Example 3 using LiBr as the lithium salt in the electrolyte had superior discharge capacity and life characteristics to Example 3 and Comparative Example 4 using LiTFSI as the lithium salt, respectively.

Presumably, higher solubility of the LiBr containing electrolyte for lithium sulfide than the LiTFSI containing electrolyte results in higher performance of spatial control over the deposition of lithium sulfide.

### Experimental Example 2. Evaluation of resistance characteristics

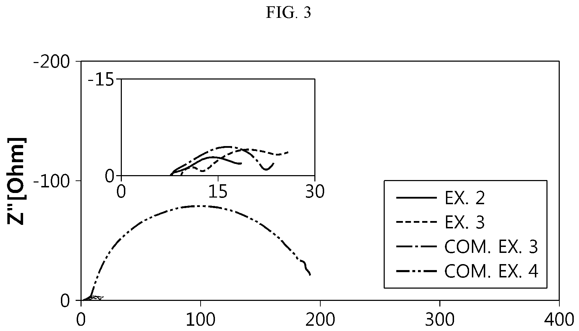

The as-prepared lithium-sulfur batteries were discharged at the same amount and impedance curves were measured. The results are shown in FIG. 3.

Referring to FIG. 3, it was confirmed through resistance component analysis that the increase in discharge capacity results from the effective deposition control of electrically insulating lithium sulfide. According to the results of FIG. 3, when the electrode of spiky structure was used together with the electrolyte solution having high solubility for lithium sulfide, the lowest resistance component was manifested.

It was confirmed that the resistance layer of lithium sulfide was notably decreased through effective control of lithium sulfide deposition, thereby mitigating overvoltage during operation of the battery, leading to a significant increase in discharge capacity.

### Experimental Example 3. Observation of lithium sulfide deposition morphology

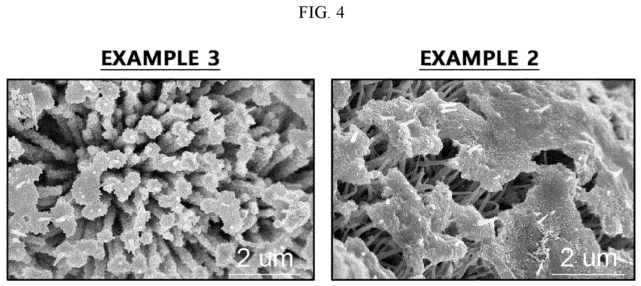

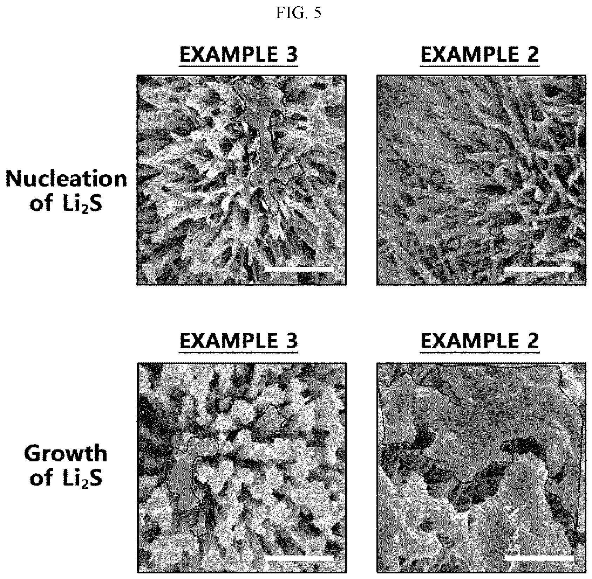

In the batteries according to Example 2 and Example 3, after the deposition of lithium polysulfide on the electrode, morphology was observed through an electron microscope (FEI company, Magellan 400, X 3,500 magnification). The observation results are shown in FIGs. 4 and 5.

Referring to FIGs. 4 and 5, first, it was confirmed that the positive electrode used in Example 2 and Example 3 includes the spiky carbon composite. However, seeing the deposition morphology of lithium sulfide on the carbon composite, it was confirmed that in Example 2, lithium sulfide was only deposited on the upper part of the electrode and the lower part of the electrode in spiky shape was not covered with lithium sulfide, while in Example 3, the spiky electrode was covered with lithium sulfide all over the area from top to bottom.

According to Example 2, the surface of the electrode that is a source of electron supply was not covered with lithium sulfide that is nonconductive, and thus the electrode passivation suppression effect by the lithium sulfide could be expected.

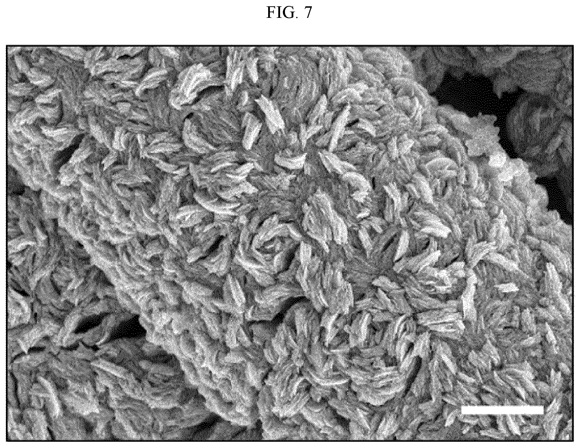

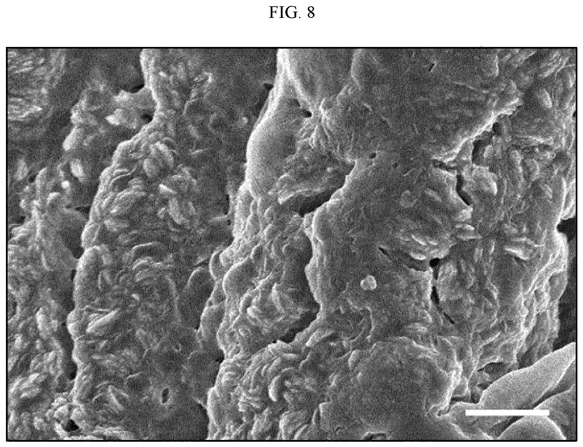

Additionally, electron microscopy observation results of the shape of the carbon composite according to Comparative Example 5 are shown in FIG. 7, and observation results of the deposition of lithium sulfide are shown in FIG. 8.

According to FIGs. 7 and 8, it was confirmed that the carbon composite used in Comparative Example 5 included the cobalt metal particles on the porous carbon substrate, but the shape was not spiky and was in a predetermined grain shape. Also, it was confirmed that LiBr was used as the lithium salt in the electrolyte, but lithium sulfide was deposited over the entire surface of the carbon composite due to the failed control of initial deposition location of lithium sulfide.

### Experimental Example 4. Surface observation of metal particles after deposition of lithium sulfide

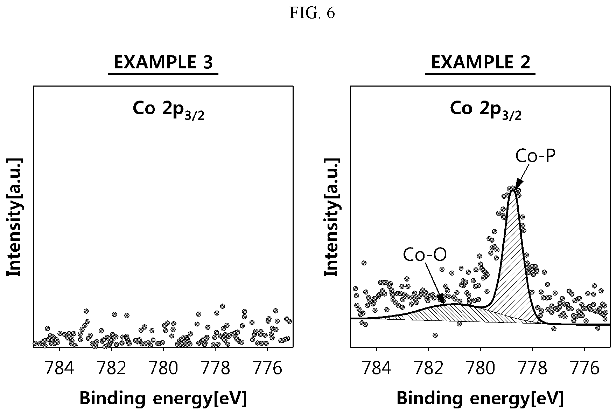

After the deposition of lithium sulfide on the metal particles of the carbon composite through the series of experiments, the surface characteristics of the metal particles were analyzed through X-ray photoelectron spectroscopy (XPS) analysis. The analysis results are shown in FIG. 6.

As previously confirmed through FIGs. 4 and 5, cobalt particles formed in spiky shape were found in the electrode according to Example 2 and Example 3 after the deposition of lithium sulfide.

In contrast, referring to FIG. 6, all Co-P and Co-O peaks of the cobalt metal particles (CoP) indicative of spiky shape after the deposition of lithium sulfide were not observed in Example 3, while the two peaks were clearly observed in Example 2.

Through this, as can be seen in FIGs. 4 and 5 showing the deposition morphology of lithium sulfide, it was confirmed that the surface of the electrode according to Example 3 is covered with lithium sulfide, while the surface of the electrode according to Example 2 has some regions not covered with lithium sulfide.

Accordingly, not only surface image observation but also surface analysis confirmed that the deposition of lithium sulfide could be effectively controlled.

## Claims

1. A carbon composite comprising:
a porous carbon substrate, and
metal particles on at least part of a surface of the porous carbon substrate,
wherein the metal particles are spiky in shape.

2. The carbon composite according to claim 1, wherein given that a location adjacent to the surface of the porous carbon substrate where the metal particles are formed is referred to as lower and a direction running outward from the surface of the porous carbon substrate is referred to as upper, the spiky metal particles have a shape with a smaller upper radius than a lower radius and an L/D of 1 or more, wherein the L/D is a ratio of a total length to the lower radius.

3. The carbon composite according to claim 2, wherein the spiky metal particles have the L/D of 5 or more.

4. The carbon composite according to claim 2, wherein the upper radius (D₅₀) of the spiky metal particles is 100 nm or less.

5. The carbon composite according to claim 2, wherein the lower radius (D₅₀) of the spiky metal particles is from 100 nm to 1,000 nm.

6. The carbon composite according to claim 2, wherein the total length (D₅₀) of the spiky metal particles is from 1 µm to 10 µm.

7. The carbon composite according to claim 1, wherein the metal particles include transition metal particles.

8. The carbon composite according to claim 1, wherein the porous carbon substrate includes carbon fiber cloth, carbon nanotube (CNT), graphene, graphene oxide (GO), reduced graphene oxide (rGO), carbon black, graphite, graphite nanofiber (GNF), carbon nanofiber (CNF), activated carbon fiber (ACF), activated carbon, fullerene, or two or more of these materials.

9. An electrode comprising:
the carbon composite according to any one of claims 1 to 8; and
a sulfur-based material.

10. The electrode according to claim 9, wherein the sulfur-based material is coated on all or part of a surface of the carbon composite.

11. A lithium secondary battery comprising:
an electrode assembly including a positive electrode, a negative electrode and a separator between the positive electrode and the negative electrode; and
an electrolyte,
wherein the positive electrode is the electrode according to claim 9.

12. The lithium secondary battery according to claim 11, wherein the electrolyte includes, as a lithium salt, LiBr, LiCl, LiI, LiTf or a mixture thereof.

13. The lithium secondary battery according to claim 11, wherein the lithium secondary battery is a lithium-sulfur battery.

14. A method for manufacturing the carbon composite according to any one of claims 1 to 8, the method comprising:
mixing a metal chloride hydrate, an ammonium fluoride and urea to prepare a metal particle precursor solution; and
forming spiky metal particles on at least part of a surface of a porous carbon substrate through hydrothermal reaction while the porous carbon substrate is in contact with the metal particle precursor solution.

15. The method for manufacturing the carbon composite according to claim 14, wherein the metal chloride hydrate is a chloride hydrate of transition metal.
